# EUROPÄISCHE PATENTANMELDUNG

(11) **EP 1 057 679 A1**
(43) Veröffentlichungstag der Anmeldung: **06.12.2000**
(21) Anmeldenummer: 00108126.4
(22) Anmeldetag: 13.04.2000
(51) Int. Cl.: B60K 31/04

(54) **Verfahren und Vorrichtung zur Begrenzung der Fahrgeschwindigkeit eines Kraftfahrzeugs mittels Gangschaltung eines Getriebes**

(30) Priorität: 31.05.1999 DE 19924946
(71) Anmelder: DaimlerChrysler AG, 70567 Stuttgart (DE)
(72) Erfinder: Linden, Thomas, 70327 Stuttgart (DE)

(57) **Zusammenfassung**

Bei einem Verfahren zur Begrenzung der Fahrgeschwindigkeit eines Kraftfahrzeugs auf eine vorgebbare Höchstgeschwindigkeit werden für den Fall, daß die vom Fahrer über die Ist-Gaspedalstellung angeforderte Geschwindigkeit höher ist als die vorgegebene Höchstgeschwindigkeit, unter Berücksichtigung von Fahrzeug-Zustandsgrößen und Fahrzeug-Betriebsgrößen Stellsignale zur Einlegung einer bestimmten, der eingestellten Höchstgeschwindigkeit zugeordneten Getriebe-Gangstufe erzeugt.

Um Komfort und Fahrsicherheit bei Fahrzeugen mit Automatikgetrieben, die mit einem Geschwindigkeits-Begrenzersystem ausgestattet sind, zu verbessern, wird bei aktivierter Geschwindigkeitsbegrenzung auf die Höchstgeschwindigkeit für einen definierten Geschwindigkeitsbereich bis zur Höchstgeschwindigkeit eine untere Gangbegrenzung mit einer Mindest-Gangstufe im Getriebe vorgegeben. Die untere Gangbegrenzung wird eingeschaltet, falls nach der Aktivierung der Geschwindigkeitsbegrenzung die aktuelle Gangstufe eine definierte Getriebe-Gangstufe erreicht.

## Beschreibung

Die Erfindung betrifft ein Verfahren und eine Vorrichtung zur Begrenzung der Fahrgeschwindigkeit eines Kraftfahrzeugs nach dem Oberbegriff des Anspruches 1 bzw. 9.

Es sind Geschwindigkeits-Regelsysteme bekannt, mit denen eine vom Fahrer vorgegebene oder über ein automatisches Ermittlungssystem errechnete Zielgeschwindigkeit in einem Kraftfahrzeug selbsttätig eingehalten werden kann. Diese Geschwindigkeits-Regelsysteme umfassen sowohl Tempomat-Funktionen, bei denen das Fahrzeug eine vom Fahrer gewählte Mindestgeschwindigkeit einhalten soll, als auch Begrenzer-Funktionen, bei denen das Fahrzeug eine vom Fahrer vorgegebene oder eine beispielsweise in Abstands-Regelungssystemen automatisch ermittelte Höchstgeschwindigkeit nicht überschreiten darf. Bei den Begrenzer-Funktionen werden in dem Geschwindigkeits-Regelsystem ausgehend von der Höchstgeschwindigkeit und den aktuellen Fahrzeugzustandsgrößen, insbesondere der aktuellen Fahrzeuggeschwindigkeit, Steilsignale erzeugt, mittels denen der Motor, das Getriebe oder die Radbremsen zur Einhaltung der Höchstgeschwindigkeit eingestellt werden.

Aus der Druckschrift DE 44 07 082 A1 ist es bekannt, zur Steuerung von Automatikgetrieben in Kraftfahrzeugen ein Getriebe-Stellsignal zu erzeugen, um das Fahrzeug aus der momentanen Geschwindigkeit auf eine gewünschte Höchstgeschwindigkeit abzubremsen, die beispielsweise dem Abstand zu einem vorausfahrenden Fahrzeug entsprechend ermittelt wird. Hierzu wird ein Gangwechsel in einen kleineren Gang erzwungen, wodurch ein höheres Übersetzungsverhältnis mit einem größeren Verzögerungsmaß erreicht wird. Der Fahrer hat bei diesem System die Möglichkeit, über die Betätigung des Beschleunigungspedals die automatische Abstands- bzw. Geschwindigkeitsregelung außer Kraft zu setzen und den Abstand zum vorausfahrenden Fahrzeug nach eigenem Wunsch einzustellen.

Aus der Druckschrift DE 195 09 492 C2 ist ein Geschwindigkeits-Regelsystem mit Begrenzerfunktion bekannt, bei dem vom Fahrer eine maximal zulässige Höchstgeschwindigkeit vorgebbar ist. Das Regelsystem begrenzt die Fahrzeuggeschwindigkeit selbsttätig auf die Höchstgeschwindigkeit, wenn die Betätigung des Gaspedals durch den Fahrer eine höhere Fahrzeuggeschwindigkeit als die eingestellte Höchstgeschwindigkeit ergeben würde. In diesem Fall wird unabhängig von der tatsächlichen Gaspedalstellung ein der vorgegebenen Höchstgeschwindigkeit entsprechendes Stellsignal erzeugt, das zur Einstellung des Motors und des Getriebes herangezogen wird.

Wird eine verhältnismäßig niedrige Geschwindigkeit als Höchstgeschwindigkeit vorgegeben, beispielsweise 30 km/h, so treten bei Fahrten im Stadt- bzw. in einem Wohngebiet in dem zulässigen Geschwindigkeitsbereich unterhalb der eingestellten Höchstgeschwindigkeit insbesondere beim Anfahren häufige Gangwechsel auf, die sich störend auf den Einschwingvorgang im Antriebsstrang auswirken. Um dies zu vermeiden, kann eine untere Gangbegrenzung vorgegeben werden, mit der ein Anfahren in der zweiten Gangstufe erzwungen wird. Im Zeitpunkt der Zuschaltung der Geschwindigkeitsbegrenzung findet jedoch in der Regel ein Gangwechsel statt, ebenso bei der Abschaltung der Geschwindigkeitsbegrenzung. Dieser Gangwechsel kann vom Fahrer oftmals nicht in Verbindung mit der Aktivierung oder Deaktivierung Geschwindigkeitsbegrenzung gebracht werden, was zu Irritationen und gegebenenfalls zu Fehlreaktionen führen kann.

Der Erfindung liegt das Problem zugrunde, Komfort und Fahrsicherheit bei Fahrzeugen mit Automatikgetrieben, die mit einem Geschwindigkeits-Begrenzersystem ausgestattet sind, zu verbessern. Es sollen insbesondere im niederen Geschwindigkeitsbereich bei aktiviertem Begrenzersystem häufige Gangwechsel vermieden werden.

Dieses Problem wird erfindungsgemäß mit den Merkmalen des Anspruches 1 bzw. 10 gelöst.

Gemäß der Neuerung wird die Aktivierung der unteren Gangbegrenzung von der Aktivierung der Geschwindigkeitsbegrenzung entkoppelt. Die untere Gangbegrenzung, die zu einer Verbesserung des Einschwingvorgangs insbesondere im niedrigen Geschwindigkeitsbereich, beispielsweise beim Anfahren, und zu einer Verringerung abzubauenden Antriebsmoments beiträgt, wird erst in dem Zeitpunkt zugeschaltet, wenn die aktuelle Gangstufe im Getriebe eine bestimmte Gangstufe erreicht. Vor dem Erreichen dieser Gangstufe folgt der Gangstufenverlauf der regulären Schaltlogik, so daß insbesondere das Anfahren von Null oder aus kleinen Geschwindigkeiten mit der kleinsten Gangstufe erfolgt. Erst nach dem Erreichen der definierten Gangstufe wird die untere Gangstufenbegrenzung zugeschaltet. Dies hat den Vorteil, daß die Gangstufenbegrenzung erst mit Verzögerung aktiviert wird, und zwar zu einem Zeitpunkt, zu dem ohnehin ein Gangwechsel stattfindet. Die Aktivierung der Gangstufenbegrenzung wird unbemerkt vom Fahrer durchgeführt, Irritationen und Fehlreaktionen werden vermieden.

In einer vorteilhaften Weiterbildung ist vorgesehen, daß die untere Gangstufenbegrenzung aktiviert wird, wenn die aktuelle Gangstufe die Mindest-Gangstufe erreicht, die entweder vorgegeben wird oder die aus Parametern oder beschreibenden Größen ermittelt wird. In letzterem Fall kann es zweckmäßig sein, die Mindest-Gangstufe mit der der Höchstgeschwindigkeit zugeordneten Getriebe-Gangstufe gleichzusetzen.

Diese Vorgehensweise bietet den Vorteil, daß mit dem Erreichen der Mindest-Gangstufe die untere Gangbegrenzung bis zur Deaktivierung beibehalten wird und die Zahl der Gangwechsel auf ein Minimum reduziert wird.

Gegebenenfalls kann als Aktivierungskriterium für die untere Gangbegrenzung auch berücksichtigt werden, daß die aktuelle Gangstufe die der Höchstgeschwindigkeit zugeordnete Getriebe-Gangstufe erreicht.

Als zusätzliche Bedingung für die Aktivierung der unteren Gangbegrenzung kann abgeprüft werden, ob die vorgegebene Höchstgeschwindigkeit geringer ist als eine Grenzgeschwindigkeit, um sicherzustellen, daß nur bei verhältnismäßig kleinen Geschwindigkeitsbereichen ein Anfahren in höheren Gangstufen stattfindet. Als Grenzgeschwindigkeit wird beispielsweise 36 km/h eingestellt.

Es kann gegebenenfalls aber auch zweckmäßig sein, auch bei höheren Geschwindigkeiten eine untere Gangbegrenzung für das Anfahren zu aktivieren, wobei in diesem Fall vorteilhaft eine Mindest-Gangstufe eingestellt wird, die unter der der Höchstgeschwindigkeit entsprechenden Gangstufe liegt.

Auch die Deaktivierung der unteren Gangbegrenzung wird vorzugsweise von der Abschaltung der Geschwindigkeitsbegrenzung entkoppelt. Die Deaktivierung der unteren Gangbegrenzung erfolgt automatisiert anhand von im Regelsystem abzuprüfender Kriterien. Es wird insbesondere geprüft, ob nach der Abschaltung der Geschwindigkeitsbegrenzung die aktuelle Gangstufe einen höheren Wert einnimmt als die vorgegebene Mindest-Gangstufe der unteren Gangbegrenzung. Sofern dies der Fall ist, wird auch die untere Gangbegrenzung deaktiviert und die reguläre Schaltlogik wieder in Kraft gesetzt. Darüberhinaus kann eine Deaktivierung der unteren Gangbegrenzung aber auch für den Fall vorgenommen werden, daß nach der Abschaltung der Begrenzerfunktion die tatsächliche Fahrzeuggeschwindigkeit die zuvor eingestellte Höchstgeschwindigkeit überschreitet.

Weitere Vorteile und zweckmäßige Ausführungsformen sind den weiteren Ansprüchen, der Figurenbeschreibung und den Zeichnungen zu entnehmen. Es zeigen:
- Fig. 1: ein Ablaufdiagramm mit den grundlegenden Verfahrensschritten für eine Steuerung eines Automatikgetriebes zur Begrenzung der Fahrzeuggeschwindigkeit,
- Fig. 2: ein Schaubild mit dem Verlauf einer Begrenzerfunktion eines Geschwindigkeits-Regelsystems,
- Fig. 3: ein Schaubild mit dem tatsächlichen Geschwindigkeitsverlauf und der einstellbaren Höchstgeschwindigkeit,
- Fig. 4: ein Schaubild mit dem zeitabhängigen Verlauf der tatsächlichen und der Mindest-Gangstufe.

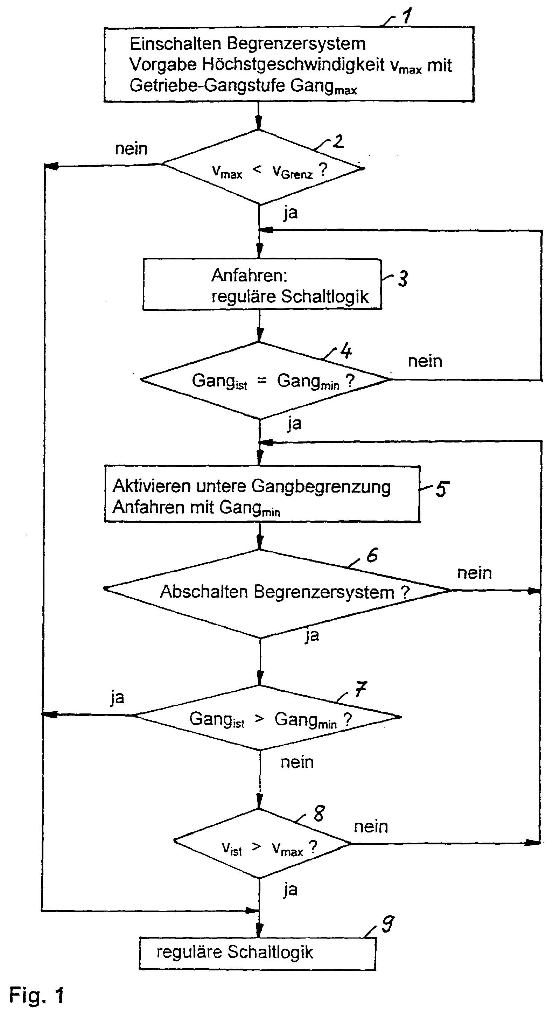

Das in Fig. 1 dargestellte Ablaufschema ist in einem Begrenzersystem eines Kraftfahrzeugs als Teil einer übergeordneten Regeleinheit realisiert. Das Geschwindigkeits-Begrenzersystem wird zur Begrenzung der Fahrzeuggeschwindigkeit auf eine vorgebbare Höchstgeschwindigkeit vₘₐₓ eingesetzt, wobei die Höchstgeschwindigkeit vₘₐₓ sowohl vom Fahrer vorgegeben werden kann als auch von einem Fahrzeugsystem automatisch ermittelbar ist, beispielsweise in einem Abstands-Regelsystem gemäß vorgegebener Kriterien ermittelt werden kann. Das Begrenzersystem kann sowohl die Brennkraftmaschine als auch das Automatikgetriebe zur Einhaltung der Höchstgeschwindigkeit beeinflussen. Im folgenden wird eine vorteilhafte Manipulation der Gangstufen im Automatikgetriebe beschrieben.

Gemäß dem Ablaufschema nach Fig. 1 wird in einem Verfahrensschritt 1 zunächst das Geschwindigkeits-Begrenzersystem unter Vorgabe einer Höchstgeschwindigkeit vₘₐₓ eingeschaltet. Dieser Höchstgeschwindigkeit vₘₐₓ wird gemäß einer hinterlegten Kennlinie eine Getriebe-Gangstufe Gangₘₐₓ zugeordnet, welche unter Normalbedingungen bei Einhaltung der Höchstgeschwindigkeit vₘₐₓ bei eingeschaltetem Begrenzersystem beibehalten wird, wobei die Getriebegangstufe Gangₘₐₓ gemäß einer regulären hinterlegten Schaltlogik im Automatikgetriebe eingestellt wird. Die Höchstgeschwindigkeit vₘₐₓ wird auch für den Fall eingehalten, daß die vom Fahrer erzeugte tatsächliche Gaspedalstellung einen korrespondierenden, vom Begrenzer erzeugten und der Höchstgeschwindigkeit entsprechenden Ersatzwert übersteigt; in diesem Fall wird der Ersatzwert der Einstellung von Motor und Getriebe zugrunde gelegt.

Die folgenden Verfahrensschritte 2 bis 8 beschreiben ein automatisiertes Zuschalten und Abschalten einer unteren Gangbegrenzung, die zur Ganganhebung insbesondere beim Anfahren im kleinen Geschwindigkeitsbereich durchgeführt wird, um Getriebe-Einschwingvorgänge zu optimieren. Nach dem Einschalten des Begrenzersystems im Verfahrensschritt 1 wird im folgenden Verfahrensschritt 2 überprüft, ob die im Begrenzersystem vorgegebene Höchstgeschwindigkeit vₘₐₓ kleiner ist als eine applizierbare Grenzgeschwindigkeit v_{Grenz}, welche zweckmäßig im Begrenzersystem als Parameter abgespeichert ist und beispielsweise einen Wert von 36 km/h einnehmen kann. Für den Fall, daß die Höchstgeschwindigkeit vₘₐₓ nicht kleiner ist als die Grenzgeschwindigkeit v_{Grenz} ("Nein"-Verzweigung) werden die Verfahrensschritte 3 bis 8 übersprungen und es wird zum Verfahrensschritt 9 fortgefahren, gemäß dem die reguläre Schaltlogik in Kraft gesetzt bzw. beibehalten wird. In diesem Fall wird keine untere Gangbegrenzung mit Vorgabe einer Mindestgangstufe durchgeführt.

Sofern die Höchstgeschwindigkeit vₘₐₓ kleiner ist als die Grenzgeschwindigkeit V_{Grenz} (^{"}Ja"-Verzweigung), wird zum folgenden Verfahrensschritt 3 fortgefahren, gemäß dem beim ersten Anfahren nach Zuschaltung des Begrenzersystems die reguläre Schaltlogik für die Schaltung der Gangstufen im Automatikgetriebe angewendet wird. Während des ersten Anfahrens wird gemäß dem Verfahrensschritt 4 laufend überprüft, ob die aktuelle Gangstufe Gangᵢₛₜ die Mindest-Gangstufe Gangₘᵢₙ der unteren Gangbegrenzung bereits erreicht hat. Sofern die aktuelle Gangstufe Gangᵢₛₜ noch kleiner ist als die Mindest-Gangstufe Gangₘᵢₙ ("Nein"-Verzweigung), wird mit dem Anfahrvorgang im Geschwindigkeitsbereich unterhalb der vorgegebenen Höchstgeschwindigkeit vₘₐₓ entsprechend dem Verfahrensschritt 3 fortgefahren.

Sofern die aktuelle Gangstufe Gangᵢₛₜ die Mindest-Gangstufe Gangₘᵢₙ erreicht hat ("Ja"-Verzweigung), wird entsprechend dem Verfahrensschritt 5 die untere Gangbegrenzung aktiviert, gemäß der im gesamten Geschwindigkeitsbereich unterhalb von vₘₐₓ die Mindest-Gangstufe Gangₘᵢₙ als unterster Gang vorgegeben wird. Nach der Aktivierung der unteren Gangbegrenzung werden alle weiteren Anfahrvorgänge mit der Mindest-Gangstufe Gangₘᵢₙ durchgeführt. Die Mindest-Gangstufe Gangₘᵢₙ kann entweder fest vorgegeben werden, beispielsweise fest als zweiter Gang vorgegeben werden, oder in Abhängigkeit weiterer Parameter oder beschreibender Größen ermittelt werden. Gemäß einer vorteilhaften Ausführung ist die Mindest-Gangstufe Gangₘᵢₙ identisch mit der der vorgegebenen Höchstgeschwindigkeit vₘₐₓ zugeordneten Getriebe-Gangstufe Gangₘₐₓ, was zur Folge hat, daß unter Normalbedingungen die nach dem ersten Anfahren erreichte Gangstufe Gangₘₐₓ bis zum Abschalten des Begrenzersystems beibehalten wird. Insbesondere im kleinen Geschwindigkeitsbereich zwischen Null und vₘₐₓ werden dadurch lästige Gangwechsel vermieden.

Die Aktivierung der unteren Gangbegrenzung kann auch über den Zeitpunkt des Abschaltens des Begrenzersystems hinaus aufrechterhalten werden. Gemäß Verfahrensschritt 6 wird eine Abfrage durchgeführt, ob das Begrenzersystem abgeschaltet wird. Sofern dies nicht der Fall ist, wird der "Nein"-Verzweigung entsprechend zum Verfahrensschritt 5 zurückgekehrt, das Begrenzersystem und auch die untere Gangbegrenzung bleiben aktiviert. Sofern das Begrenzersystem abgeschaltet werden soll ("Ja"-Verzweigung), wird zu den Verfahrensschritten 7 und 8 fortgefahren, in denen überprüft wird, ob auch die Bedingungen für eine Deaktivierung der unteren Gangbegrenzung vorliegen. Gemäß Verfahrensschritt 7 wird zunächst überprüft, ob die aktuelle Gangstufe im Automatikgetriebe einen höheren Gang einnimmt als die noch aktivierte Mindestgangstufe Gangₘᵢₙ. Sofern dies der Fall ist, wird der "Ja"-Verzweigung entsprechend unmittelbar zum Verfahrensschritt 9, der Wiederaufnahme der regulären Schaltlogik, fortgefahren. Sofern die aktuelle Gangstufe Gangᵢₛₜ die Mindestgangstufe Gangₘᵢₙ nicht übersteigt ("Nein"-Verzweigung), wird im folgenden Verfahrensschritt 8 eine weitere Bedingung zum Deaktivieren der unteren Gangbegrenzung überprüft. Gemäß dem Verfahrensschritt 8 wird die untere Gangbegrenzung für den Fall abgeschaltet, daß die tatsächliche Fahrzeuggeschwindigkeit vᵢₛₜ die vorgegebene Höchstgeschwindigkeit vₘₐₓ überschreitet. Sofern dies der Fall ist, wird der "Ja"-Verzweigung entsprechend zur regulären Schaltlogik 9 fortgefahren, andernfalls wird gemäß der "Nein"-Verzweigung zum Verfahrensschritt 5 zurückgekehrt und die untere Gangbegrenzung mit der Mindestgangstufe Gangₘᵢₙ wird weiterhin aufrechterhalten. Die Überprüfung der tatsächlichen Fahrzeuggeschwindigkeit auf Überschreitung der Höchstgeschwindigkeit stellt eine Option dar, die gegebenenfalls auch weggelassen werden kann.

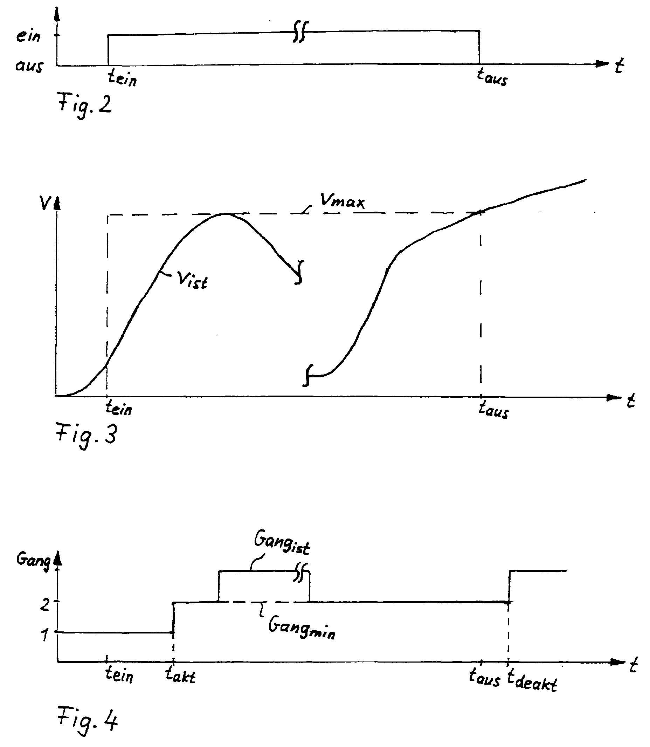

Die Fig. 2 bis 4 zeigen zeitabhängige Verläufe diverser Zustands- und Betriebsgrößen des Begrenzersystems. In Fig. 2 ist die Schaltfunktion des Begrenzersystems dargestellt, das entweder manuell oder über ein Abstands-Regelsystem oder ähnliches zur Begrenzung der Höchstgeschwindigkeit auf einen Wert vₘₐₓ aktiviert werden kann (Schaltstufe "ein" zum Zeitpunkt tₑᵢₙ). Bis zum Wiederausschalten des Begrenzersystems (Schaltstufe "aus" zum Zeitpunkt tₐᵤₛ) wird die Einhaltung der zulässigen Höchstgeschwindigkeit vₘₐₓ vom Begrenzersystem überwacht.

Im Geschwindigkeitsbereich unterhalb der zulässigen Höchstgeschwindigkeit vₘₐₓ reagiert das Fahrzeug unmittelbar auf Anforderungen des Fahrers, ein regelnder Eigriff des Begrenzersystems wird nur für den Fall durchgeführt, daß die Fahreranforderung eine entsprechende Gaspedal-Ersatzgröße des Begrenzersystems übersteigt. Fig. 3 zeigt den zeitabhängigen Verlauf der vorgegebenen Höchstgeschwindigkeit vₘₐₓ sowie der aktuellen Fahrzeuggeschwindigkeit vᵢₛₜ. Zum Zeitpunkt tₑᵢₙ - dem Zeitpunkt, zu dem das Begrenzersystem eingeschaltet wird - wird die zulässige Höchstgeschwindigkeit auf vₘₐₓ gesetzt, zum Zeitpunkt tₐᵤₛ -dem Zeitpunkt des Ausschaltens des Begrenzersystems - wird die Begrenzung auf die Höchstgeschwindigkeit vₘₐₓ außer Funktion gesetzt. Im Geschwindigkeitsbereich zwischen Null und der zulässigen Höchstgeschwindigkeit vₘₐₓ bewegt sich die tatsächliche Fahrzeuggeschwindigkeit vᵢₛₜ entsprechend der Anforderung durch den Fahrer. Erst nach dem Ausschalten des Begrenzersystems zum Zeitpunkt tₐᵤₛ kann die tatsächliche Fahrzeuggeschwindigkeit vᵢₛₜ einen die Höchstgeschwindigkeit vₘₐₓ überschreitenden Wert einnehmen.

Fig. 4 zeigt den zugehörigen, zeitabhängigen Verlauf der Gangstufe im Automatikgetriebe. Im Zeitabschnitt des ersten Anfahrens nach Aktivierung des Begrenzersystems zum Zeitpunkt tₑᵢₙ befindet sich die aktuelle Gangstufe Gangᵢₛₜ entsprechend der regulären Schaltlogik des Getriebes auf dem Wert eins. Sofern, wie in Fig. 3 dargestellt, das Fahrzeug bis zum Erreichen der Höchstgeschwindigkeit vₘₐₓ beschleunigt wird, schaltet das Getriebe mit zunehmender Geschwindigkeit in eine höhere Gangstufe. Zum Zeitpunkt tₐₖₜ wird ein Gangwechsel vom ersten in den zweiten Gang durchgeführt, zu diesem Zeitpunkt wird die untere Gangbegrenzung aktiviert. Die untere Gangbegrenzung wird aktiviert, sobald zum Zeitpunkt tₐₖₜ die mit durchgezogener Linie dargestellte, aktuelle Gangstufe Gangᵢₛₜ das mit gestrichelter Linie eingetragene Niveau der Mindest-Gangstufe Gangₘᵢₙ erreicht, welches im Ausführungsbeispiel die Gangstufe zwei einnimmt. Im Ausführungsbeispiel liegt die Gangstufe Gangₘᵢₙ bei zwei, demzufolge wird die untere Gangbegrenzung aktiviert, sobald die aktuelle Gangstufe Gangᵢₛₜ vom ersten in den zweiten Gang wechselt.

Bis zur Deaktivierung des unteren Gangbegrenzung zum Zeitpunkt t_{deakt} kann die Mindestgangstufe Gangₘᵢₙ nicht unterschritten werden, dagegen ist mit weiter zunehmender Fahrzeuggeschwindigkeit vᵢₛₜ bis zur Höchstgeschwindigkeit vₘₐₓ ein weiteres Hochschalten der Getriebegangstufe möglich, wobei zweckmäßig unter Normalbedingungen eine der Höchstgeschwindigkeit vₘₐₓ zugeordnete Getriebegangstufe Gangₘₐₓ nicht überschritten wird.

Die Abschaltung des Begrenzersystems zum Zeitpunkt tₐᵤₛ und die Deaktivierung der unteren Gangbegrenzung zum Zeitpunkt t_{deakt} können auseinanderfallen. Im Ausführungsbeispiel wird als Bedingung für die Deaktivierung der unteren Gangbegrenzung vorgegeben, daß das Begrenzersystem ausgeschaltet ist und daß die aktuelle Gangstufe Gangᵢₛₜ einen höheren Wert einnimmt als die Mindestgangstufe Gangₘᵢₙ.

Es kann darüber hinaus aber auch zweckmäßig sein, als Abschaltbedingung für die untere Gangbegrenzung vorzugeben, daß das Begrenzersystem ausgeschaltet ist und daß außerdem die aktuelle Fahrzeuggeschwindigkeit die Höchstgeschwindigkeit vₘₐₓ übersteigt.

## Patentansprüche

1. Verfahren zur Begrenzung der Fahrgeschwindigkeit eines Kraftfahrzeugs auf eine vorgebbare Höchstgeschwindigkeit, wobei für den Fall, daß die dem vom Fahrer über die Ist-Gaspedalstellung (Gasᵢₛₜ) angeforderten Motormoment entsprechende Geschwindigkeit höher ist als die vorgegebene Höchstgeschwindigkeit (vₘₐₓ), unter Berücksichtigung von Fahrzeug-Zustandsgrößen und Fahrzeug-Betriebsgrößen Stellsignale zur Einlegung einer bestimmten, der eingestellten Höchstgeschwindigkeit (vₘₐₓ) zugeordneten Getriebe-Gangstufe (Gangₘₐₓ) erzeugt werden,
**dadurch gekennzeichnet,**
dass mit Aktivierung der Begrenzung der Fahrgeschwindigkeit auf die Höchstgeschwindigkeit (vₘₐₓ) für einen definierten Geschwindigkeitsbereich bis zur Höchstgeschwindigkeit (vₘₐₓ) reine untere Gangbegrenzung mit einer Mindest-Gangstufe (Gangₘᵢₙ) im Getriebe vorgegeben wird und die untere Gangbegrenzung mit der Mindest-Gangstufe (Gangₘᵢₙ) erst dann wirksam wird, wenn nach der Aktivierung der Geschwindigkeitsbegrenzung die aktuelle Gangstufe (Gangᵢₛₜ) eine definierte Getriebe-Gangstufe erreicht.

2. Verfahren nach Anspruch 1,
**dadurch gekennzeichnet,**
daß die untere Gangbegrenzung für den Fall eingeschaltet wird, daß die aktuelle Gangstufe (Gangᵢₛₜ) die Mindest-Gangstufe (Gangₘᵢₙ) erreicht.

3. Verfahren nach Anspruch 1 oder 2,
**dadurch gekennzeichnet,**
daß die Mindest-Gangstufe (Gangₘᵢₙ) identisch ist mit der der eingestellten Höchstgeschwindigkeit (vₘₐₓ) zugeordneten Getriebe-Gangstufe (Gangₘₐₓ).

4. Verfahren nach Anspruch 1,
**dadurch gekennzeichnet,**
daß die untere Gangbegrenzung für den Fall eingeschaltet wird, daß die aktuelle Gangstufe (Gangᵢₛₜ) die der eingestellten Höchstgeschwindigkeit (vₘₐₓ) zugeordnete Getriebe-Gangstufe (Gangₘₐₓ) erreicht.

5. Verfahren nach einem der Ansprüche 1 bis 4,
**dadurch gekennzeichnet,**
daß der Geschwindigkeitsbereich, in welchen eine untere Gangbegrenzung vorgegeben wird, den gesamten Bereich zwischen Null und der Höchstgeschwindigkeit (vₘₐₓ) abdeckt.

6. Verfahren nach einem der Ansprüche 1 bis 5,
**dadurch gekennzeichnet,**
daß die untere Gangbegrenzung unter der Bedingung einschaltbar ist, daß die vorgegebene Höchstgeschwindigkeit (vₘₐₓ) unterhalb einer Grenzgeschwindigkeit (v_{Grenz}) liegt.

7. Verfahren nach einem der Ansprüche 1 bis 6,
**dadurch gekennzeichnet,**
daß bei der Abschaltung der Geschwindigkeitsbegrenzung die untere Gangbegrenzung unter der Bedingung abschaltbar ist, daß die aktuelle Gangstufe (Gangᵢₛₜ) einen höheren Wert einnimmt als die Mindest-Gangstufe (Gangₘᵢₙ).

8. Verfahren nach einem der Ansprüche 1 bis 7,
**dadurch gekennzeichnet,**
daß bei der Abschaltung der Geschwindigkeitsbegrenzung die untere Gangbegrenzung unter der Bedingung abschaltbar ist, daß die aktuelle Fahrzeuggeschwindigkeit (vᵢₛₜ) einen höheren Wert einnimmt als die vorgegebene Höchstgeschwindigkeit (vₘₐₓ).

9. Vorrichtung zur Einstellung der Fahrgeschwindigkeit eines Kraftfahrzeugs auf eine vorgebbare Höchstgeschwindigkeit, insbesondere Vorrichtung zur Durchführung des Verfahrens nach einem der Ansprüche 1 bis 8, mit einem einer Regeleinheit zugeordneten Geschwindigkeits-Begrenzersystem, in welchem unter Berücksichtigung von Fahrzeug-Zustands- und Fahrzeug-Betriebsgrößen Steilsignale zur Einlegung einer bestimmten Gangstufe erzeugbar und einem Automatikgetriebe des Kraftfahrzeugs zuführbar sind,
**dadurch gekennzeichnet,**
dass in der Regeleinheit nach der Aktivierung des Geschwindigkeits-Begrenzersystems ein der aktuellen Gangstufe (Gangᵢₛₜ) entsprechendes Signal mit einem Signal, das eine der eingestellten Höchstgeschwindigkeit (vₘₐₓ) zugeordnete Getriebe-Gangstufe (Gangₘₐₓ) repräsentiert, verglichen wird und dann, wenn die aktuelle Gangstufe (Gangᵢₛₜ) die der eingestellten Höchstgeschwindigkeit (vₘₐₓ) zugeordnete Getriebe-Gangstufe (Gangₘₐₓ) innerhalb eines definierten Geschwindigkeitsbereichs, der maximal die eingestellte Höchstgeschwindigkeit (vₘₐₓ) umfasst, erreicht, ein einer vorgebbaren Mindest-Gangstufe (Gangₘᵢₙ) entsprechendes Steilsignal erzeugt wird.
